(19) Europäisches Patentamt / European Patent Office / Office européen des brevets

(11) **EP 4 448 652 B1**

(12) **EUROPEAN PATENT SPECIFICATION**

(45) Date of publication and mention
of the grant of the patent:
**13.08.2025  Bulletin 2025/33**

(21) Application number: **22818871.0**

(22) Date of filing: **13.12.2022**

(51) International Patent Classification (IPC):
*C08L 23/12* (2006.01)

(52) Cooperative Patent Classification (CPC):
(C-Sets available)
**C08L 23/12;** C08L 2205/035; C08L 2207/02
(Cont.)

(86) International application number:
**PCT/EP2022/085732**

(87) International publication number:
**WO 2023/110954 (22.06.2023 Gazette 2023/25)**

(54) **COMPOSITION FOR LUGGAGE CASE**

ZUSAMMENSETZUNG FÜR KOFFER

COMPOSITION POUR VALISE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **15.12.2021  PCT/CN2021/138446**

(43) Date of publication of application:
**23.10.2024  Bulletin 2024/43**

(73) Proprietor: **SABIC Global Technologies B.V.
4612 PX Bergen op Zoom (NL)**

(72) Inventors:
 • **HUANG, Ting**
  **6160 GA Geleen (NL)**
 • **JIANG, Chaodong**
  **6160 GA Geleen (NL)**
 • **GREIN, Christelle Marie Hélène**
  **6160 GA Geleen (NL)**
 • **KONG, Xin**
  **Shanghai 201319 (CN)**
 • **LI, Kunjiao**
  **Shanghai 201319 (CN)**
 • **WANG, Zhuo**
  **QINGDAO, Shandong 266071 (CN)**

(74) Representative: **Sabic Intellectual Property Group
Sabic Intellectual Property Department
P.O. Box 3008
6160 GA Geleen (NL)**

(56) References cited:
**EP-A1- 2 423 257     EP-A1- 2 927 274
EP-A2- 2 340 279**

EP 4 448 652 B1

(52) Cooperative Patent Classification (CPC): (Cont.)

C-Sets
**C08L 23/12, C08L 23/12, C08L 23/16,
C08L 23/0815**

# EP 4 448 652 B1

**Description**

The invention relates to a composition comprising a propylene-based polymer, to a process for obtaining such composition and an article comprising such composition, in particular a luggage case.

Propylene-based polymers are used for many applications, including a luggage case. Propylene-based polymers can be a propylene homopolymer or a single-phase propylene copolymer or a heterophasic propylene copolymer.

Luggage cases are subjected to relatively severe conditions during use, in particular larger luggage cases for check-in during flights. There are accordingly tests to determine whether luggage cases have sufficient properties for use, such as stress whitening resistance, gloss, impact strength and tensile properties.

EP3674363 discloses a luggage made of a polypropylene modified material comprising a homo-polypropylene 10-40wt%, polypropylene copolymer 35-60wt%, polyolefin elastomer 5-15wt%, polyethylene 10-20wt%, nucleating agent 0.03-0.08wt%, antioxidant 0.03-0.06wt%, and fluidity modifier 2-6wt%.

It is an object of the invention to provide a composition having a combination of good mechanical properties for making luggage cases.

Accordingly, the present invention provides a composition comprising (A) a heterophasic propylene copolymer, (B) a propylene homopolymer and (C) a polyolefin-based elastomer, wherein

(A) the heterophasic propylene copolymer consists of (a1) a propylene-based matrix, wherein the propylene-based matrix consists of a propylene homopolymer and/or a propylene copolymer consisting of at least 90 wt% of propylene monomer units and at most 10 wt% of ethylene and/or α-olefin monomer units, based on the total weight of the propylene-based matrix and (a2) a dispersed ethylene-α-olefin copolymer, wherein the sum of the total amount of propylene-based matrix and total amount of the dispersed ethylene-α-olefin copolymer in the heterophasic propylene copolymer is 100 wt%,

(C) the polyolefin-based elastomer has a melt flow index of 15 to 50 dg/min measured according to ASTM D1238 with a 2.16 kg load at 190 °C,

the total amount of (a2) and (C) with respect to the total composition is 20.0 to 26.0 wt% and

the composition has a melt flow index as measured according to ISO1133-1:2011 with a 2.16kg load at 230°C of 25 to 60 dg/min.

According to the invention, a heterophasic propylene copolymer is mixed with a propylene homopolymer and a polyolefin-based elastomer having a relatively high MFI. The specific total amount of the dispersed rubber phase of the heterophasic propylene copolymer and the specific polyolefin-based elastomer according to the invention was found to result in a combination of good mechanical properties for making luggage cases, such as good stress whitening resistance, gloss and impact strength.

(A) heterophasic propylene copolymer

Heterophasic propylene copolymers are generally prepared in one or more reactors, by polymerization of propylene in the presence of a catalyst and subsequent polymerization of an ethylene-α-olefin mixture. The resulting polymeric materials are heterophasic, but the specific morphology usually depends on the preparation method and monomer ratios used.

The heterophasic propylene copolymers employed in the present invention can be produced using any conventional technique known to the skilled person, for example multistage process polymerization, such as bulk polymerization, gas phase polymerization, slurry polymerization, solution polymerization or any combinations thereof. Any conventional catalyst systems, for example, Ziegler-Natta or metallocene may be used. Such techniques and catalysts are described, for example, in WO06/010414; Polypropylene and other Polyolefins , by Ser van der Ven, Studies in Polymer Science 7, Elsevier 1990; WO06/010414, US4399054 and US4472524.

Preferably, the heterophasic propylene copolymer is made using Ziegler-Natta catalyst.

The heterophasic propylene copolymer may be prepared by a process comprising

- polymerizing propylene and optionally ethylene and/or α-olefin in the presence of a catalyst system to obtain the propylene-based matrix and
- subsequently polymerizing ethylene and α-olefin in the propylene-based matrix in the presence of a catalyst system to obtain the dispersed ethylene-α-olefin copolymer.

These steps are preferably performed in different reactors. The catalyst systems for the first step and for the second step may be different or same.

The heterophasic propylene copolymer of the composition of the invention consists of a propylene-based matrix

3

and a dispersed ethylene-α-olefin copolymer. The propylene-based matrix typically forms the continuous phase in the heterophasic propylene copolymer. The amounts of the propylene-based matrix and the dispersed ethylene-a-olefin copolymer may be determined by $^{13}$C-NMR, as well known in the art.

The propylene-based matrix consists of a propylene homopolymer and/or a propylene copolymer consisting of at least 90 wt% of propylene monomer units and at most 10 wt% of comonomer units selected from ethylene monomer units and α-olefin monomer units having 4 to 10 carbon atoms, for example consisting of at least 95 wt% of propylene monomer units and at most 5 wt% of the comonomer units, based on the total weight of the propylene-based matrix.

Preferably, the comonomer in the propylene copolymer of the propylene-based matrix is selected from the group of ethylene, 1-butene, 1 -pentene, 4-methyl-1-pentene, 1-hexen, 1-heptene and 1-octene, and is preferably ethylene.

Preferably, the propylene-based matrix consists of a propylene homopolymer. The fact that the propylene-based matrix consists of a propylene homopolymer is advantageous in that a higher stiffness is obtained compared to the case where the propylene-based matrix is a propylene-α-olefin copolymer.

The melt flow index (MFI) of the propylene-based matrix (before the heterophasic propylene copolymer is mixed into the composition of the invention), $MFI_{PP}$, may be for example at least 0.1 dg/min, at least 0.2 dg/min, at least 0.3 dg/min, at least 0.5 dg/min, and/or for example at most 20 dg/min, at most 10 dg/min, at most 5.0 dg/min, at most 3.0 dg/min, at most 1.0 dg/min, measured according to ISO1133-1:2011 (2.16 kg/230°C).

Preferably, the propylene-based matrix is present in an amount of 60 to 98 wt%, for example at most 97 wt%, at most 96 wt%, at most 95 wt%, at most 93 wt% or at most 91 wt%, based on the total heterophasic propylene copolymer. Preferably, the propylene-based matrix is present in an amount of at least 70 wt%, more preferably at least 75 wt%, for example at least 80 wt%, at least 85 wt%, at least 87 wt% or at least 90 wt%, based on the total heterophasic propylene copolymer.

The propylene-based matrix is preferably semi-crystalline, that is it is not 100% amorphous, nor is it 100% crystalline. For example, the propylene-based matrix is at least 40% crystalline, for example at least 50%, for example at least 60% crystalline and/or for example at most 80% crystalline, for example at most 70% crystalline. For example, the propylene-based matrix has a crystallinity of 60 to 70%. For purpose of the invention, the degree of crystallinity of the propylene-based matrix is measured using differential scanning calorimetry (DSC) according to ISO11357-1 and ISO11357-3 of 1997, using a scan rate of 10°C/min, a sample of 5mg and the second heating curve using as a theoretical standard for a 100% crystalline material 207.1 J/g.

Besides the propylene-based matrix, the heterophasic propylene copolymer also comprises a dispersed ethylene-α-olefin copolymer. The dispersed ethylene-α-olefin copolymer is also referred to herein as the 'dispersed phase'. The dispersed phase is embedded in the heterophasic propylene copolymer in a discontinuous form. The particle size of the dispersed phase is typically in the range of 0.05 to 2.0 microns, as may be determined by transmission electron microscopy (TEM). The amount of the dispersed ethylene-α-olefin copolymer in the heterophasic propylene copolymer may herein be sometimes referred as RC.

Preferably, the amount of ethylene monomer units in the ethylene-α-olefin copolymer is 5 to 30 wt%, preferably 6 to 25 wt%, 7 to 20 wt% or 8 to 15 wt%. The amount of ethylene monomer units in the dispersed ethylene-α-olefin copolymer in the heterophasic propylene copolymer may herein be sometimes referred as RCC2.

The α-olefin in the ethylene-α-olefin copolymer is preferably chosen from the group of α-olefins having 3 to 8 carbon atoms. Examples of suitable α-olefins having 3 to 8 carbon atoms include but are not limited to propylene, 1 -butene, 1-pentene, 4-methyl-1-pentene, 1-hexen, 1-heptene and 1-octene. More preferably, the α-olefin in the ethylene-α-olefin copolymer is chosen from the group of α-olefins having 3 to 4 carbon atoms and any mixture thereof, more preferably the α-olefin is propylene, in which case the ethylene-α-olefin copolymer is ethylene-propylene copolymer.

The MFI of the dispersed ethylene α-olefin copolymer (before the heterophasic propylene copolymer is mixed into the composition of the invention), MFIrubber, may be for example at least 0.001 dg/min, at least 0.03 dg/min or at least 0.05 dg/min, and/or for example at most 0.1 dg/min or 0.01 dg/min. MFIrubber is calculated according to the following formula:

$$MFIrubber = 10\text{^}(\frac{Log\ MFIheterophasic - matrix\ content * Log\ MFImatrix}{rubber\ content})$$

wherein MFIheterophasic is the MFI (dg/min) of the heterophasic propylene copolymer measured according to ISO1133-1:2011 (2.16kg/230°C), MFImatrix is the MFI (dg/min) of the propylene-based matrix measured according to ISO1133-1:2011 (2.16kg/230°C), matrix content is the fraction of the propylene-based matrix in the heterophasic propylene copolymer, rubber content is the fraction of the dispersed ethylene-α-olefin copolymer in the heterophasic propylene copolymer. The sum of the matrix content and the rubber content is 1 . For the avoidance of any doubt, Log in the formula means $log_{10}$.

Preferably, the dispersed ethylene-α-olefin copolymer is present in an amount of 2.0 to 40 wt%, for example at least 3.0 wt%, at least 4.0 wt%, at least 5.0 wt%, at least 7.0 wt% or at least 9.0 wt%, based on the total heterophasic propylene copolymer. Preferably, the dispersed ethylene-α-olefin copolymer is present in an amount of at most 30 wt%, more preferably at most 25 wt%, for example at most 20 wt%, at most 15 wt%, at most 13 wt% or at most 10 wt%, based on the total heterophasic propylene copolymer. This leads to the suitable total rubber amount to achieve good mechanical properties of the composition according to the invention together with the polyolefin elastomer.

In the heterophasic propylene copolymer in the composition of the invention, the sum of the total weight of the propylene-based matrix and the total weight of the dispersed ethylene-α-olefin copolymer is 100 wt% of the heterophasic propylene copolymer.

Preferably, the heterophasic propylene copolymer has a fraction soluble in p-xylene at 25°C (CXS) measured according to ISO 16152:2005 of 2.0 to 40 wt%, for example 9.0 to 25 wt%.

Preferably, the amount of ethylene monomer units in the heterophasic propylene copolymer (sometimes referred as TC2) is in the range of 0.5 to 5.0 wt%, for example 1.0 to 3.0 wt%, based on the heterophasic propylene copolymer.

Preferably, the MFI of the heterophasic propylene copolymer is 5.0 to 50 g/10 min, for example at least 10 dg/min, at least 15 dg/min, at least 20 dg/min and/or at most 45 dg/min, at most 40 dg/min or at most 35 dg/min, measured according to ISO1133-1 :2011 (230°C /2.16 kg). This leads in particular to the good processibility of the composition according to the invention.

Preferably, in the heterophasic propylene copolymer according to the invention, the comonomer in the propylene-α-olefin copolymer is selected from ethylene and the group of α-olefins having 4 to10 carbon atoms and the α-olefin in the ethylene-α-olefin copolymer is selected from the group of α-olefins having 3 to 8 carbon atoms. Most preferably, in the heterophasic propylene copolymer according to the invention, the comonomer in the propylene-α-olefin copolymer is ethylene and the α-olefin in the ethylene-α-olefin copolymer is propylene.

Preferably, the amount of (A) the heterophasic propylene copolymer with respect to the composition of the invention is 60 to 95 wt%, preferably 70 to 90 wt% or 75 to 85 wt%.

Preferably, the amount of (a2) the dispersed ethylene-α-olefin copolymer with respect to the composition of the invention is 5 to 25 wt%, 7 to 24 wt%, 9 to 22 wt% or 11 to 20 wt%. This leads to the suitable total rubber amount to achieve good mechanical properties of the composition according to the invention together with the polyolefin elastomer.

### (B) propylene homopolymer

The composition of the invention comprises (B) a propylene homopolymer. Preferably, (B) has a melt flow index (MFI) measured according to ISO1133-1:2011 (2.16 kg/230°C) which is higher than the melt flow index (MFI) measured according to ISO1133-1:2011 (2.16 kg/230°C) of (A). This leads in particular to the good processibility of the composition according to the invention.

The propylene homopolymer may have a melt flow index (MFI) measured according to ISO1133-1:2011 (2.16 kg/230°C) of 25 to 100 dg/min, for example at least 30 dg/min, at least 40 dg/min, at least 45 dg/min or at least 50 dg/min, and/or for example at most 90 dg/min, at most 80 dg/min, at most 75 dg/min, at most 70 dg/min.

Preferably, the amount of (B) the propylene homopolymer with respect to the composition of the invention is 5 to 30 wt%, preferably 10 to 20 wt%.

### (C) polyolefin-based elastomer

The composition of the invention comprises a polyolefin-based elastomer. Preferably, the polyolefin-based elastomer is a copolymer of ethylene and α-olefin comonomer having 4 to 10 carbon atoms. The use of such ethylene copolymer leads to a better flexural modulus of the composition according to the invention than the use of an ethylene-propylene copolymer as the polyolefin-based elastomer.

The α-olefin comonomer in the elastomer preferably has 4 to 8 carbon atoms and is preferably an acyclic monoolefin such as 1 -butene, 1 - pentene, 1 -hexene, 1 -octene, or 4-methyl-1 -pentene. Most preferably, the elastomer is an ethylene-1-octene copolymer.

Preferably, the elastomer has a density of 0.850 to 0.890 g/cm$^3$. Preferably, the density of the first elastomer is 0.855 to 0.880 g/cm$^3$, 0.860 to 0.870 g/cm$^3$ or 0.865 to 0.870 g/cm$^3$.

The elastomers may be prepared using methods known in the art, for example by using a single site catalyst, i.e., a catalyst the transition metal components of which is an organometallic compound and at least one ligand of which has a cyclopentadienyl anion structure through which such ligand bondingly coordinates to the transition metal cation. This type of catalyst is also known as "metallocene" catalyst. Metallocene catalysts are for example described in U.S. Patent Nos. 5,017,714 and 5,324,820. The elastomers may also be prepared using traditional types of heterogeneous multi-sited Ziegler-Natta catalysts.

The elastomer has a melt flow index min measured according to ASTM D1238 with a 2.16 kg load and at a temperature of 190 °C of 15 to 50 dg/min, preferably 17 to 48 dg/min, more preferably 20 to 46 dg/min, more preferably 25 to 45 dg/min, more preferably 26 to 40 dg/min, more preferably 27 to 35 dg/min. This leads to a combination of good mechanical properties for making luggage cases, such as good stress whitening resistance, gloss, impact strength and tensile properties.

Preferably, the amount of (C) the elastomer with respect to the composition of the invention is 1 to 15 wt%, 2 to 13 wt%, 3 to 11 wt% or 5 to 9 wt%. This leads to the suitable total rubber amount to achieve good mechanical properties of the composition according to the invention together with the dispersed phase of the heterophasic propylene copolymer.

The total amount of (a2) and (C) with respect to the total composition is 20.0 to 26.0 wt%, preferably 22.0 to 25.0 wt%, more preferably 23.5 wt% to 25.5 wt%.

(D) Additives

The composition according to the invention may optionally comprise additives. The additives may include nucleating agents, stabilizers, e.g. heat stabilisers, anti-oxidants, UV stabilizers; colorants, like pigments and dyes; clarifiers; surface tension modifiers; lubricants; flame-retardants; mould-release agents; flow improving agents; plasticizers; anti-static agents; blowing agents.

The skilled person can readily select any suitable combination of additives and additive amounts without undue experimentation. The amount of the additives depends on their type and function and typically is of from 0 to about 10 wt%. The amount of the additives may e.g. be from about 0.1 to about 5 wt%; from about 1 to about 4 wt% or from 1 .5 to about 3 wt% based on the total composition. The total amount of (A), (B), (C) and (D) should add up to 100% by weight. Preferably, the total of components (A), (B) and (C) is at least 90 wt%, at least 95 wt%, at least 97 wt%, at least 98 wt%, at least 99 wt%, at least 99.5 wt%, at least 99.9 wt% or 100 wt% of the total composition.

Composition

The composition has a melt flow index as measured according to ISO1133-1:2011 with a 2.16kg load at 230°C of 25 to 60 dg/min, preferably 30 to 50 dg/min, more preferably 31 to 45 dg/min, more preferably 32 to 40 dg/min.

Further aspects

The composition of the invention may be obtained by a process comprising melt-mixing (A), (B), (C) and optionally (D) by using any suitable means. Accordingly, the invention further relates to a process for the preparation of the composition according to the invention comprising melt mixing (A), (B), (C) and optionally (D).

Preferably, the composition of the invention is made in a form that allows easy processing into a shaped article in a subsequent step, like in pellet or granular form. The composition can be a mixture of different particles or pellets; like a blend of (A), (B), (C) and a masterbatch of additives. Preferably, the composition of the invention is in pellet or granular form as obtained by mixing all components in an apparatus like an extruder; the advantage being a composition with homogeneous and well-defined concentrations of the additives.

Melt-mixing may be done using techniques known to the skilled person, for example in an extruder. Generally, in the process of the invention, melt-mixing is performed at a temperature in the range of 200 to 260°C.

Suitable conditions for melt-mixing, such as temperature, pressure, amount of shear, screw speed and screw design when an extruder is used are known to the skilled person.

The composition according to the invention may be processed by known processing methods, in particular injection molding.

The invention further relates to an article comprising the composition according to the invention, in particular a luggage case. In particular, the invention relates to an injection molded article comprising or made from the composition according to the invention, in particular a luggage case.

In particular, the invention relates to an injection molded article comprising or made from the composition according to the invention, in particular a luggage case having a capacity of 100 to 130 L, for example 105 to 120 L.

It is noted that the invention relates to the subject-matter defined in the independent claims alone or in combination with any possible combinations of features described herein, preferred in particular are those combinations of features that are present in the claims. It will therefore be appreciated that all combinations of features relating to the composition according to the invention; all combinations of features relating to the process according to the invention and all combinations of features relating to the composition according to the invention and features relating to the process according to the invention are described herein.

It is further noted that the term 'comprising' does not exclude the presence of other elements. However, it is also to be understood that a description on a product/composition comprising certain components also discloses a product/-composition consisting of these components. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process.

When values are mentioned for a lower limit and an upper limit for a parameter, ranges made by the combinations of the values of the lower limit and the values of the upper limit are also understood to be disclosed.

The invention is now elucidated by way of the following examples, without however being limited thereto.

Materials

ICP1: heterophasic propylene copolymer consisting of a matrix of propylene homopolymer and 22.3 wt% of a dispersed phase of ethylene-propylene copolymer having an ethylene content of 11 wt%. MFI 29 dg/min (ISO1133-1:2011 with a 2.16kg load at 230°C)

ICP2: heterophasic propylene copolymer consisting of a matrix of propylene homopolymer and 22.3 wt% of a dispersed phase of ethylene-propylene copolymer having an ethylene content of 11 wt%. MFI 3.5 dg/min (ISO1133-1:2011 with a 2.16kg load at 230°C)

homoPP1: propylene homopolymer having MFI 60 dg/min (ISO1133-1:2011 with a 2.16kg load at 230°C)

homoPP2: propylene homopolymer having MFI 12 dg/min (ISO1133-1:2011 with a 2.16kg load at 230°C)

homoPP3: propylene homopolymer having MFI 3.1 dg/min (ISO1133-1:2011 with a 2.16kg load at 230°C)

HDPE1: high density polyethylene having MFI of 20 dg/min (ASTM D1238 with a 2.16 kg at 190 °C) and density at 23 °C of 0.956 g/cm$^3$ (ASTM D1505)

POE1: copolymer of ethylene and 1-octene, having MFI of 30.0 dg/min (ASTM D1238 with a 2.16 kg load and at 190 °C) and density of 0.868 g/cm3 (ASTM D792)

POE2: copolymer of ethylene and 1-octene, having MFI of 5.0 dg/min (ASTM D1238 with a 2.16 kg load and at 190 °C) and density of 0.868 g/cm3 (ASTM D792)

POE3: copolymer of ethylene and 1-octene, having MFI of 1.0 dg/min (ASTM D1238 with a 2.16 kg load and at 190 °C) and density of 0.868 g/cm3 (ASTM D792)

The components as shown in Tables 1 and 2 were melt-mixed to obtain compositions as shown in Tables 1 and 2.

The properties of the compositions were measured as follows and are shown in Tables 1 and 2.

MFI (dg/min): ISO 1133 (2.16 kg, 230 °C)

Charpy impact strength (kJ/m$^2$): ISO 179 at 23 °C , 0 °C and -20 °C

Tensile modulus (MPa), tensile strength at yield (MPa), tensile strength at break (MPa) and tensile elongation at break (%): ISO 527

Flexural modulus (MPa) and flexural strength (MPa): ISO 178

Mould shrinkage (%), in the context of this invention called shrinkage, is the amount of contraction that a moulded part undergoes when it is removed from the mould cavity and cooled at room temperature. Shrinkage was measured according to ISO 294-4 on 65 x 65 x 3.2 mm injection moulded plaques after a conditioning time of 24 h after moulding at room temperature (23 °C) and 50 % relative humidity. Each of the samples was moulded using the same conditions at the moulding achine. Shrinkage measured in the flow length and perpendicular to the flow is reported here. Following equation was used to determine shrinkage:

$$\frac{L_m - L_s}{L_m} \times 100 = shrinkage\ [\%]$$

wherein $L_m$ is the length of the mould in the considered direction, and $L_s$ is the length of the specimen in considered direction. A shrinkage in the flow direction, a shrinkage in the perpendicular direction to flow direction, as well as an average (arithmetic) of both shrinkage values is reported.

Gloss: ASTM D2457 at 20° and 60 °

Stress whitening:

Stress whitening is the appearance of a white area on an object when the object is stressed after a blushing operation. The appearance of the white area indicates that there is an onset of failure of the corresponding material. The blushing on the samples was created according to PV3905, by dropping a solid stainless steel ball (0 (50.0 $\pm$ 0.03) mm) of 500 ($\pm$ 5) grams from a height of 230 mm on a test piece with dimension 100*100*2mm injected on the machine SE180. Photos of these test pieces were taken with a scanner (EPSON, V850 Pro) under the professional mode. For the scanning parameters, positive film was selected for the film type, image type was b-bit grayscale, resolution was 800 dpi, and the document size was 2.5 * 2.5 inch. In addition, no histogram adjustment was employed during the scanning process.

The image analysis is performed at MATLAB 2020a platform in order to determine values of the parameter "spot size" (area)

The spot size (area) was determined as follows:

The total whiteness of the whole photo is calculated as the sum of the whiteness of each pixel in the whole photo. The whiteness of the intrinsic material is defined as 0. Each pixel constituting the sample has a whiteness of 0-255. The spot size is defined as the size of the area which has 100% of the whiteness of the whole photo.

Integrated Intensity:

an integrated intensity with regard of the area $\Sigma$ I x $\Delta x$ x $\Delta y$. The intensity has been normalized via subtracting the median intensity of the surroundings.

The compositions were injection molded at 210 °C into a luggage case having dimensions of 76 cm x 51 cm x 32 cm according to QBT 2155-2010 and its properties were measured as follows and are shown in Tables 1 and 2.

Up/Down test: QBT 2922-2007 (Case and bag - Test method for shaking impact). Indicated as pass when there is no unacceptable damage after 2000 times.

Rolling test: QBT 4116-2010 (Case and bag. Test method for rotary drum). Indicated as pass when there is no unacceptable stress whitening.

Gloss: visual inspection, determined as pass if a high gloss is observed

Drop ball impact: QBT 2921-2007 (Case and bag. Test method for fall down), tested at -12 °C, 6h. Indicated as pass if no crack detected

Drop test: QBT 2918-2007-T (Case and bag - Test method for impact resistance by means of falling weight), Indicated as pass if no crack detected.

**Table 1**

|  | CEx A | CEx B | Ex 1 | CEx C | CEx D | CEx E |
|---|---|---|---|---|---|---|
| ICP1 - MFI 29 | 79 | 79 | 79 | 79 | 79 |  |
| ICP2 - MFI 3.5 |  |  |  |  |  | 79 |
| homoPP1 - MFI 60 | 14 | 14 | 14 |  |  | 14 |
| homoPP2 - MFI 12 |  |  |  |  | 14 |  |
| homoPP3 - MFI 3 |  |  |  | 14 |  |  |
| POE1 - MFI 30 |  |  | 7 | 7 | 7 | 7 |
| POE2 - MFI 5 |  | 7 |  |  |  |  |
| POE3- MFI 1 | 7 |  |  |  |  |  |
|  |  |  |  |  |  |  |
| Rubber total* | 24.6 | 24.6 | 24.6 | 24.6 | 24.6 | 24.6 |
|  |  |  |  |  |  |  |
| MFI @ 2.16 kg @230°C | 32.87 | 35.5 | 34.81 | 25.47 | 28.8 | 10.37 |
| Charpy @ 23 | 10 | 11.2 | 10.8 | 10.5 | 10.5 | 49.5 |
| Charpy @ 0 | 6.4 | 6.5 | 6.6 | 6.2 | 6.3 | 9 |
| Charpy @ -20 | 4.5 | 4.5 | 4.6 | 4.4 | 4.4 | 6.5 |
| Tensile modulus | 1113.4 | 1096.8 | 1091.8 | 1132.3 | 1117.4 | 1099 |
| Tensile strength @ Yield | 22.2 | 22.2 | 21.9 | 22.8 | 22.3 | 22.1 |
| Tensile strength @ break | 15.3 | 15.1 | 15 | 16.1 | 15.2 | 17.8 |
| Tensile elongation at break | 44.68 | 51.87 | 61.37 | 80.02 | 46.54 | 300.16 |
| Flexural modulus | 1151.2 | 1185.2 | 1136.4 | 1207.2 | 1211 | 1214.8 |
| Flexural strength | 30.74 | 31.38 | 30.26 | 31.6 | 31.72 | 31.62 |

(continued)

|  | CEx A | CEx B | Ex 1 | CEx C | CEx D | CEx E |
|---|---|---|---|---|---|---|
| shrinkage | 1.12 | 1.08 | 1.1 | 1.16 | 1.12 | 1.42 |
| shrinkage | 1.38 | 1.35 | 1.34 | 1.48 | 1.43 | 1.58 |
| Gloss @ 20 | 52.56 | 55.18 | 59.1 | 55.4 | 61.02 | 34.78 |
| Gloss @ 60 | 62.8 | 64.76 | 67.86 | 68.52 | 69.64 | 52.28 |
| Stress whitening intensity | 240 | 205 | 195 | 210 | 235 | |
| Up/Down test | Pass | Pass | Pass | | | |
| Rolling test | Stress whitening | Pass | Pass | | | |
| Gloss | Medium gloss | close to pass | Pass-high gloss | | | |
| Drop ball impact | Fail | Pass | Pass | | | |
| Drop test | Pass | Pass | Pass | | | |
| *Rubber total is the sum of the dispersed phase in ICP and POE in wt% | | | | | | |

The composition of Ex 1 according to the invention shows a combination of good impact strength, tensile properties, flexural properties, shrinkage, gloss and stress whitening property, and a luggage case made from the composition of Ex 1 passed all relevant tests for a luggage case.

The composition of CEx E could not be injection molded into a luggage case having the specified dimensions at a temperature of 210 °C. It can thus be understood that the low MFI of the total composition leads to difficulty in injection molding. Further, as can also be understood from CEx C and D, it leads to a bad stress whitening property.

From the comparison of Ex 1 versus CEx A and CEx B, it can be understood that the use of the elastomer having a high MFI according to the invention leads to a better gloss and a better stress whitening property.

From the comparison of Ex 1 versus CEx C and CEx D and, it can be understood that the use of the homopolymer having a high MFI according to the invention leads to a better stress whitening property.

**Table 2**

|  | CEx F | CEx G | CEx H | CEx I | CEx J |
|---|---|---|---|---|---|
| ICP1 - MFI 29 | 84 | 86 | 88 | 90 | 90 |
| HDPE1 | 7 | 7 | 7 | 7 | 7 |
| POE1 - MFI 30 | | | | | 3 |
| POE3 - MFI 1 | 9 | 7 | 5 | 3 | |
| | | | | | |
| Rubber total | 0.278 | 0.262 | 0.247 | 0.231 | 0.231 |
| | | | | | |
| MFI @ 2.16 kg @230°C | 30.73 | 27.68 | 31.05 | 31.29 | 31.58 |
| Charpy @ RT | 52.8 | 50.3 | 47.7 | 16.9 | 14.8 |
| Charpy @ 0 | 11.3 | 10.6 | 9.1 | 8 | 8.7 |
| Charpy @ -20 | 8.2 | 7.8 | 6.7 | 6 | 5.6 |
| Tensile modulus | 846.9 | 890.5 | 975.1 | 1002 | 997.7 |
| Tensile strength @ Yield | 17.8 | 19.5 | 20.5 | 21 | 20.8 |
| Tensile strength @ break | 13.5 | 13.5 | 14.7 | 14.9 | 14.9 |
| Tensile elongation at break | 52.99 | 40.05 | 35.28 | 33.97 | 41.05 |

(continued)

| | CEx F | CEx G | CEx H | CEx I | CEx J |
|---|---|---|---|---|---|
| Flexural modulus | 966.7 | 974.13 | 1016.4 | 1047.6 | 1176.4 |
| Flexural strength | 25.38 | 25.37 | 26.72 | 27.66 | 30.06 |
| shrinkage | 1.06 | 1.09 | 1.12 | 1.15 | 1.17 |
| shrinkage | 1.35 | 1.4 | 1.43 | 1.45 | 1.45 |
| Gloss @ 20 | 19.58 | 42.24 | 46.86 | 45.6 | 45.78 |
| Gloss @ 60 | 30.56 | 50.72 | 54.08 | 52.76 | 56.48 |
| | | | | | |
| Stress whitening internal | 256 | 245 | 230 | 220 | 230 |
| | | | | | |
| Up/Down test | Fail (~150) | Fail (handle 1=727, handle 2=1841) | Fail (handle 1=1427, handle 2=2041) | Pass | Pass |
| Rolling test | Obvious stress whitening | Obvious stress whitening | Obvious stress whitening | Obvious stress whitening | Stress whitening |
| Gloss | Low gloss | Low gloss | Low gloss | Low gloss | Low gloss |
| Drop ball impact | Pass | Pass | Pass | Pass | Pass |
| Drop test | Pass | Pass | Pass | Pass | Pass |
| *Rubber total is the sum of the dispersed phase in ICP and POE in wt% | | | | | |

The compositions shown in Table 2 made using an HDPE instead of a propylene homopolymer do not show satisfactory stress whitening properties. The gloss properties are also not satisfactory.

From the comparison of CEx F, CEx G, CEx H and CEx I, it can be understood that when the total rubber amount is too high, the tensile modulus and tensile strength become too low and the luggage case made from the composition does not pass the up/down test and the rolling test and has low gloss.

The difference between the MFI of the composition CEx J and Ex 1 is small, but the composition of Ex 1 has a much better stress whitening property and gloss property. This may be attributed to the higher total rubber amount in the composition of Ex 1.

Claims

1. A composition comprising (A) a heterophasic propylene copolymer, (B) a propylene homopolymer and (C) a polyolefin-based elastomer, wherein

   (A) the heterophasic propylene copolymer consists of (a1) a propylene-based matrix, wherein the propylene-based matrix consists of a propylene homopolymer and/or a propylene copolymer consisting of at least 90 wt% of propylene monomer units and at most 10 wt% of ethylene and/or a- olefin monomer units, based on the total weight of the propylene-based matrix and (a2) a dispersed ethylene-$\alpha$-olefin copolymer, wherein the sum of the total amount of propylene-based matrix and total amount of the dispersed ethylene-$\alpha$-olefin copolymer in the heterophasic propylene copolymer is 100 wt%,
   (C) the polyolefin-based elastomer has a melt flow index of 15 to 50 dg/min measured according to ASTM D1238 with a 2.16 kg load at 190 °C,
   the total amount of (a2) and (C) with respect to the total composition is 20.0 to 26.0 wt% and
   the composition has a melt flow index as measured according to ISO1133-1:2011 with a 2.16kg load at 230°C of 25 to 60 dg/min.

2. The composition according to claim 1, wherein the amount of (A) with respect to the composition is 60 to 95 wt%, the amount of (B) with respect to the composition is 5 to 30 wt% and the amount of (C) the elastomer with respect to the composition is 1 to 15 wt%.

3. The composition according to any one of the preceding claims, wherein (A) has a melt flow index as measured according to ISO1133-1:2011 with a 2.16kg load at 230°C of 5.0 to 50 g/10 min, preferably 10 to 40 g/10 min, particularly preferably 20 to 35 g/10 min.

4. The composition according to any one of the preceding claims, wherein the amount of (a2) in (A) is 2.0 to 40 wt%, for example at least 3.0 wt%, at least 4.0 wt%, at least 5.0 wt%, at least 7.0 wt% or at least 9.0 wt% and/or at most 30 wt%, more preferably at most 25 wt%, for example at most 20 wt%, at most 15 wt%, at most 13 wt% or at most 10 wt%.

5. The composition according to any one of the preceding claims, wherein (B) has a melt flow index as measured according to ISO1133-1:2011 with a 2.16kg load at 230°C of 25 to 100 dg/min, for example at least 30 dg/min, at least 40 dg/min, at least 45 dg/min or at least 50 dg/min, and/or for example at most 90 dg/min, at most 80 dg/min, at most 75 dg/min, at most 70 dg/min.

6. The composition according to any one of the preceding claims, wherein (C) is a copolymer of ethylene and $\alpha$-olefin comonomer having 4 to 10 carbon atoms.

7. The composition according to any one of the preceding claims, (C) is an ethylene-1-octene copolymer.

8. The composition according to any one of the preceding claims, wherein (C) has a melt flow index measured according to ASTM D1238 with a 2.16 kg load and at a temperature of 190 °C of 15 to 50 dg/min, preferably 17 to 48 dg/min, more preferably 20 to 46 dg/min, more preferably 25 to 45 dg/min, more preferably 26 to 40 dg/min, more preferably 27 to 35 dg/min.

9. The composition according to any one of the preceding claims, wherein the amount of (C) with respect to the composition is 2 to 13 wt%, 3 to 11 wt% or 5 to 9 wt%.

10. The composition according to any one of the preceding claims, wherein the total amount of (a2) and (C) with respect to the total composition is 22.0 to 25.0 wt%, more preferably 23.5 wt% to 25.5 wt%.

11. The composition according to any one of the preceding claims, wherein the composition has a melt flow index as measured according to ISO1133-1:2011 with a 2.16kg load at 230°C of 30 to 50 dg/min, preferably 31 to 45 dg/min, more preferably 32 to 40 dg/min.

12. A process for the preparation of the composition according to any one of the preceding claims, comprising melt mixing (A), (B), (C) and optionally (D) additives.

13. An article obtained by injection molding the composition according to any one of claims 1 to 11.

14. The article according to claim 13 which is a luggage case.

15. The luggage case according to claim 14 having a capacity of 100 to 130 L, for example 105 to 120 L.

**Patentansprüche**

1. Zusammensetzung, umfassend (A) ein heterophasisches Propylencopolymer, (B) ein Propylenhomopolymer und (C) ein Elastomer auf Polyolefinbasis, wobei

(A) das heterophasische Propylencopolymer aus (a1) einer Matrix auf Propylenbasis, wobei die Matrix auf Propylenbasis aus einem Propylenhomopolymer und/oder einem Propylencopolymer bestehend aus mindestens 90 Gew.-% Propylenmonomereinheiten und höchstens 10 Gew.-% Ethylen- und/oder $\alpha$-Olefinmonomereinheiten, bezogen auf das Gesamtgewicht der Matrix auf Propylenbasis besteht, und (a2) einem dispergierten Ethylen-$\alpha$-Olefin-Copolymer besteht, wobei die Summe der Gesamtmenge der Matrix auf Propylenbasis und der Gesamtmenge des dispergierten Ethylen-$\alpha$-Olefin-Copolymers in dem heterophasischen Propylencopolymer 100 Gew.-% beträgt,

(C) das Elastomer auf Polyolefinbasis einen Schmelzflussindex von 15 bis 50 dg/min, gemessen nach ASTM D1238 mit einer Last von 2,16 kg bei 190 °C, aufweist,

die Gesamtmenge von (a2) und (C) in Bezug auf die Gesamtzusammensetzung 20,0 bis 26,0 Gew.-% beträgt und

die Zusammensetzung einen Schmelzflussindex, gemessen nach ISO1133-1:2011 mit einer Last von 2,16 kg bei 230 °C, von 25 bis 60 dg/min aufweist.

2. Zusammensetzung nach Anspruch 1, wobei die Menge von (A) in Bezug auf die Zusammensetzung 60 bis 95 Gew.-% beträgt, die Menge von (B) in Bezug auf die Zusammensetzung 5 bis 30 Gew.-% beträgt und die Menge von (C) dem Elastomer in Bezug auf die Zusammensetzung 1 bis 15 Gew.-% beträgt.

3. Zusammensetzung nach einem der vorstehenden Ansprüche, wobei (A) einen Schmelzflussindex, gemessen nach ISO1133-1:2011 mit einer Last von 2,16 kg bei 230 °C, von 5,0 bis 50 g/10 min, bevorzugt 10 bis 40 g/10 min, besonders bevorzugt 20 bis 35 g/10 min aufweist.

4. Zusammensetzung nach einem der vorstehenden Ansprüche, wobei die Menge von (a2) in (A) 2,0 bis 40 Gew.-%, beispielsweise mindestens 3,0 Gew.-%, mindestens 4,0 Gew.-%, mindestens 5,0 Gew.-%, mindestens 7,0 Gew.-% oder mindestens 9,0 Gew.- % und/oder höchstens 30 Gew.-%, bevorzugter höchstens 25 Gew.-%, beispielsweise höchstens 20 Gew.-%, höchstens 15 Gew.-%, höchstens 13 Gew.-% oder höchstens 10 Gew.-% beträgt.

5. Zusammensetzung nach einem der vorstehenden Ansprüche, wobei (B) einen Schmelzflussindex, gemessen nach ISO1133-1:2011 mit einer Last von 2,16 kg bei 230 °C, von 25 bis 100 dg/min, beispielsweise mindestens 30 dg/min, mindestens 40 dg/min, mindestens 45 dg/min oder mindestens 50 dg/min und/oder beispielsweise höchstens 90 dg/min, höchstens 80 dg/min, höchstens 75 dg/min, höchstens 70 dg/min aufweist.

6. Zusammensetzung nach einem der vorstehenden Ansprüche, wobei (C) ein Copolymer aus Ethylen und α-Olefin-Comonomer mit 4 bis 10 Kohlenstoffatomen ist.

7. Zusammensetzung nach einem der vorstehenden Ansprüche, wobei (C) ein Ethylen-1-Octen-Copolymer ist.

8. Zusammensetzung nach einem der vorstehenden Ansprüche, wobei (C) einen Schmelzflussindex, gemessen nach ASTM D1238 mit einer Last von 2,16 kg und bei einer Temperatur von 190 °C, von 15 bis 50 dg/min, bevorzugt 17 bis 48 dg/min, bevorzugter 20 bis 46 dg/min, bevorzugter 25 bis 45 dg/min, bevorzugter 26 bis 40 dg/min, bevorzugter 27 bis 35 dg/min aufweist.

9. Zusammensetzung nach einem der vorstehenden Ansprüche, wobei die Menge von (C) in Bezug auf die Zusammensetzung 2 bis 13 Gew.-%, 3 bis 11 Gew.-% oder 5 bis 9 Gew.- % beträgt.

10. Zusammensetzung nach einem der vorstehenden Ansprüche, wobei die Gesamtmenge von (a2) und (C) in Bezug auf die Gesamtzusammensetzung 22,0 bis 25,0 Gew.-%, bevorzugter 23,5 Gew.-% bis 25,5 Gew.-% beträgt.

11. Zusammensetzung nach einem der vorstehenden Ansprüche, wobei die Zusammensetzung einen Schmelzflussindex, gemessen nach ISO1133-1:2011 mit einer Last von 2,16 kg bei 230 °C, von 30 bis 50 dg/min, bevorzugt 31 bis 45 dg/min, bevorzugter 32 bis 40 dg/min aufweist.

12. Prozess zur Herstellung der Zusammensetzung nach einem der vorstehenden Ansprüche, umfassend Schmelzmischen von (A), (B), (C) und optional (D) Additive.

13. Artikel, der durch Spritzgießen der Zusammensetzung nach einem der Ansprüche 1 bis 11 erhalten wird.

14. Artikel nach Anspruch 13, der ein Gepäckkoffer ist.

15. Gepäckkoffer nach Anspruch 14, der ein Fassungsvermögen von 100 bis 130 l, beispielsweise 105 bis 120 l aufweist.

**Revendications**

1. Composition comprenant (A) un copolymère de propylène hétérophasique, (B) un homopolymère de propylène et (C) un élastomère à base de polyoléfine, dans laquelle

(A) un copolymère de propylène hétérophasique consiste en (a1) une matrice à base de propylène, dans lequel la matrice à base de propylène consiste en un homopolymère de propylène et/ou un copolymère de propylène consistant en au moins 90 % en poids d'unités monomères de propylène et au plus 10 % en poids d'unités monomères d'éthylène et/ou d'unités monomères d'a-oléfine sur la base du poids total de la matrice à base de propylène et (a2) un copolymère dispersé d'éthylène-$\alpha$-oléfine, dans lequel la somme de la quantité totale de matrice à base de propylène et de la quantité totale de copolymère dispersé d'éthylène-$\alpha$-oléfine dans le copolymère de propylène hétérophasique est de 100 % en poids.

(C) l'élastomère à base de polyoléfine présente un indice de fluidité à chaud de 15 à 50 dg/min mesuré selon la norme ASTM D1238 avec une charge de 2,16 kg à 190 °C,
la quantité totale de (a2) et (C) par rapport à la composition totale est de 20,0 à 26,0 % en poids et
la composition présente un indice de fluidité à chaud tel que mesuré selon la norme ISO1133-1:2011 avec une charge de 2,16 kg à 230 °C de 25 à 60 dg/min.

2. Composition selon la revendication 1, dans laquelle la quantité de (A) par rapport à la composition est de 60 à 95 % en poids, la quantité de (B) par rapport à la composition est de 5 à 30 % en poids et la quantité de (C) l'élastomère par rapport à la composition est de 1 à 15 % en poids.

3. Composition selon l'une quelconque des revendications précédentes, dans laquelle (A) présente un indice de fluidité à chaud tel que mesuré selon la norme ISO1133-1:2011 avec une charge de 2,16 kg à 230 °C de 5,0 à 50 g/10 min, de préférence de 10 à 40 g/10 min, en particulier de préférence de 20 à 35 g/10 min.

4. Composition selon l'une quelconque des revendications précédentes, dans laquelle la quantité de (a2) dans (A) est de 2,0 à 40 % en poids, par exemple au moins 3,0 % en poids, au moins 4,0 % en poids, au moins 5,0 % en poids, au moins 7,0 % en poids ou au moins 9,0 % en poids et/ou au plus 30 % en poids, plus préférentiellement au plus 25 % en poids, par exemple au plus 20 % en poids, au plus 15 % en poids, au plus 13 % en poids ou au plus 10 % en poids.

5. Composition selon l'une quelconque des revendications précédentes, dans laquelle (B) présente un indice de fluidité à chaud tel que mesuré selon la norme ISO1133-1:2011 avec une charge de 2,16 kg à 230 °C de 25 à 100 dg/min, par exemple d'au moins 30 dg/min, d'au moins 40 dg/min, d'au moins 45 dg/min ou d'au moins 50 dg/min, et/ou par exemple d'au plus 90 dg/min, d'au plus 80 dg/min, d'au plus 75 dg/min, d'au plus 70 dg/min.

6. Composition selon l'une quelconque des revendications précédentes, dans laquelle (C) est un copolymère d'éthylène et de comonomère $\alpha$-oléfine présentant de 4 à 10 atomes de carbone.

7. Composition selon l'une quelconque des revendications précédentes, (C) est un copolymère d'éthylène-1-octène.

8. Composition selon l'une quelconque des revendications précédentes, dans laquelle (C) a un indice de fluidité à chaud mesuré selon la norme ASTM D1238 avec une charge de 2,16 kg et à une température de 190 °C de 15 à 50 dg/min, de préférence de 17 à 48 dg/min, plus préférentiellement de 20 à 46 dg/min, plus préférentiellement de 25 à 45 dg/min, plus préférentiellement de 26 à 40 dg/min, plus préférentiellement de 27 à 35 dg/min.

9. Composition selon l'une quelconque des revendications précédentes, dans laquelle la quantité de (C) par rapport à la composition est de 2 à 13 % en poids, de 3 à 11 % en poids ou de 5 à 9 % en poids.

10. Composition selon l'une quelconque des revendications précédentes, dans laquelle la quantité totale de (a2) et (C) par rapport à la composition totale est de 22,0 à 25,0 % en poids, plus préférentiellement de 23,5 % en poids à 25,5 % en poids.

11. Composition selon l'une quelconque des revendications précédentes, dans laquelle la composition a un indice de fluidité à chaud tel que mesuré selon la norme ISO1133-1:2011 avec une charge de 2,16 kg à 230 °C de 30 à 50 dg/min, de préférence de 31 à 45 dg/min, plus préférentiellement de 32 à 40 dg/min.

12. Processus de préparation de la composition selon l'une quelconque des revendications précédentes, comprenant le mélange par fusion des additifs (A), (B), (C) et éventuellement (D).

13. Article pouvant être obtenu par moulage par injection de la composition selon l'une quelconque des revendications 1 à 11.

**14.** Article selon la revendication 13, qui est une valise.

**15.** Valise selon la revendication 14, présentant une capacité de 100 à 130 L, par exemple de 105 à 120 L.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3674363 A
- WO 06010414 A
- US 4399054 A
- US 4472524 A
- US 5017714 A
- US 5324820 A

### Non-patent literature cited in the description

- Polypropylene and other Polyolefins. **SER VAN DER VEN**. Studies in Polymer Science. Elsevier, 1990, vol. 7